# EUROPÄISCHE PATENTSCHRIFT

(11) **EP 2 631 952 B1**
(45) Veröffentlichungstag und Bekanntmachung des Hinweises auf die Patenterteilung: **19.09.2018**
(21) Anmeldenummer: 13154737.4
(22) Anmeldetag: 11.02.2013
(51) Int. Cl.: H01L 31/02, G08B 13/14

(54) **Verfahren und Gerät zur Funktions- und Demontagedetektion von Solarmodulen**
Method and apparatus for the functional and disassembly detection of solar modules
Procédé et appareil de détection de démontage et de fonctionnement de modules solaires

(30) Priorität: 24.02.2012 DE 102012003768
(43) Veröffentlichungstag der Anmeldung: 28.08.2013
(73) Patentinhaber: VTQ Videotronik GmbH, 06268 Querfurt (DE)
(72) Erfinder: Bundschuh, Bernhard, 57290 Neunkirchen (DE); Richter, Holger, 06632 Freyburg (DE)
(74) Vertreter: Kruspig, Volkmar

(56) Entgegenhaltungen:
- WO-A1-2009/026602
- WO-A1-2012/000533
- DE-A1-102008 062 659
- HOLGER GEISLER ET AL: "A novel high frequency pseudo noise correlator hardware design for cable fault diagnoses", PH.D. RESEARCH IN MICROELECTRONICS AND ELECTRONICS (PRIME), 2010 CONFERENCE ON, IEEE, PISCATAWAY, NJ, USA, 18. Juli 2010 (2010-07-18), Seiten 1-4, XP031764359, ISBN: 978-1-4244-7905-4
- SCANDURRA G ET AL: "Impedance meter based on cross-correlation noise measurements", NOISE AND FLUCTUATIONS (ICNF), 2011 21ST INTERNATIONAL CONFERENCE ON, IEEE, 12. Juni 2011 (2011-06-12), Seiten 381-384, XP032038931, DOI: 10.1109/ICNF.2011.5994349 ISBN: 978-1-4577-0189-4

## Beschreibung

Die vorliegende Erfindung betrifft ein Verfahren und ein Gerät zur Funktions- und Demontagedetektion für aktive oder inaktive Photovoltaikanlagen.

Regenerative Energien wie etwa die Windkraft oder die Photovoltaik gewinnen angesichts der knapper und teurer werdenden fossilen Rohstoffe, wie z.B. Erdöl und Erdgas, und aufgrund der Gefahren, die durch Entstehung von Kohlendioxid (CO2) bei der Verbrennung fossiler Brennstoffe für das Erdklima, wie z.B. die Erderwärmung, ausgehen, immer mehr an Bedeutung.

In der Bundesrepublik Deutschland werden durch das Erneuerbare Energien Gesetz (EEG) u.a. auch Investition in Photovoltaikanlagen (PV-Anlagen) gefördert, wobei der Photovoltaikmarkt jährlich um ca. 40% wächst. Die Photovoltaik wird vorwiegend zur Stromerzeugung und Einspeisung in das öffentliche Stromnetz eingesetzt und findet u.a. Anwendung auf Dachflächen, an Schallschutzwänden und auf Freiflächen. Neben der Stromgewinnung zur Einspeisung in das Stromnetz kommt die Photovoltaik bei sog. Inselanlagen ohne eine Verbindung zu einem größeren Stromnetz zum Einsatz.

Da sich Solarmodule aufgrund ihres kompakten und einfachen Aufbaus genauso einfach montieren wie demontieren lassen und sich zudem eine Vielzahl von Standorten für Photovoltaikanlagen außerhalb der großen Ballungsräume in dünn besiedelten und unbewachten Gebieten befindet, hat sich in den letzten Jahren die Zahl der Diebstähle von Solarmodulen verstärkt. Dabei werden hauptsächlich bereits montierte Anlagenteile wie Solarmodule und Wechselrichter entwendet.

Wie die Erfahrungen zeigen, stellen etwaige Einfriedungen solcher Solaranlagen mit einfachen Maschendraht- oder Wildzäunen für die Diebe nahezu ebenso kein Hindernis dar wie die mit einfachen handelsüblichen Werkzeugen schnell zu lösenden Befestigungsmittel von Anlagenteilen, so dass der Diebstahl einer Vielzahl von Solarmodulen von organisierten Banden in kurzer Zeit ohne weiteres zu bewerkstelligen ist.

Ein Aspekt bei der Diebstahlsicherung zielt darauf ab, die Zeit, die die Täter für den Diebstahl benötigen, mit entsprechenden Sicherungstechniken zu verlängern und damit das Entdeckungsrisiko zu erhöhen. Hierbei kommen zumeist mechanische Sicherungen zum Einsatz. Da sich, wie bereits erwähnt, die wesentlichen Anlagenteile wie Solarmodule und teilweise auch im Freien installierte Wechselrichter mit handelsüblichen Werkzeugen leicht und schnell lösen lassen, wird bei herkömmlichen mechanischen Sicherungstechniken ein besonderer Wert auf eine Befestigung gelegt, die sich nur mit Spezialwerkzeug oder durch Zerstörung lösen lässt. Dies hat einen erheblichen Einfluss auf den Faktor "Zeit". Dazu eignen sich beispielsweise mechanisch codierte Schrauben, Schrauben mit speziellen Antrieben wie z.B. Innensechskant, Torx usw. mit eingeschlagenen Stahlkugeln oder Stahlstopfen, Schrauben mit Einwegantrieben oder sonstige gleichwertige Befestigungssysteme.

Da sich jedoch eine Vielzahl der großen Solarparks auf Freiflächen außerhalb besiedelter Gebiete befindet, spielt der Faktor "Zeit" im Hinblick auf das Entdeckungsrisiko eine geringe Rolle. Es besteht daher ein Bedarf an Überwachungssystemen für Photovoltaikanlagen, die für die Fernüberwachung geeignet sind, so dass Manipulationen an der Anlage möglichst frühzeitig erkannt und entsprechende Interventionskräfte rechtzeitig alarmiert werden können.

Aus dem Stand der Technik sind bereits Diebstahlüberwachungseinrichtungen bekannt, die sich die elektrischen Eigenschaften von Solaranlagen zu Nutze machen.

Die DE 10 2006 049 285 A1 offenbart ein System zur Überwachung von einzelnen Solarmodulen auf Diebstahl, bei dem in der Nacht an die Reihenschaltung von einzelnen Solar-Panels bzw. Solarmodule eine im Vergleich zur Ausgangsspannung der Solaranlage größere Spannung mit umgekehrter Polarität angelegt wird. Dadurch werden die Leistungshalbleiter, die der elektrischen Verbindung dienen, in Durchlassrichtung betreiben. Zunächst wird erkannt, ob sich die Solaranlage im Nachtbetrieb befindet. Befindet sich die Anlage im Nachtbetrieb wird die Reversspannung angelegt. Der anschließend durch die Solarmodule fließende Strom wird überwacht, wobei bei einem erheblichen Stromabfall, d.h. wenn z.B. ein einzelnes Solarmodul aus der Reihenschaltung entfernt wird, ein Alarm ausgelöst wird.

Die DE 10 2007 052 653 A1 offenbart eine Diebstahlüberwachungseinrichtung, bei der das Funktionsprinzip darin besteht, ein sich zeitlich zufällig änderndes Kontrollsignal zur Verfügung zu stellen, das über einen Schalter als ein Überwachungssignal einer Reihenschaltung von Solarmodulen zugeführt wird. Somit liegen zwei Signale vor, deren zeitliche Änderung identisch ist. Durch das sich zeitlich zufällig ändernde Kontroll- und Überwachungssignal sind Manipulationen durch ein nachgestelltes Signal erschwert. Ferner besteht die Möglichkeit, sowohl die Unterbrechung des Stromkreises infolge der Entnahme eines Solarmoduls als auch die Überbrückung eines Solarmoduls zu detektieren. Eine Entnahme eines Solarmoduls aus einem Solarmodul-String mit den in Reihe geschalteten Solarmodulen führt dazu, dass der Stromfluss durch das Solarmodul-String komplett unterbrochen wird, was mit Hilfe einer Vergleichsschaltung erfassbar ist. Wird hingegen in der Absicht, ein bestimmtes Modul zu entnehmen, dieses Modul zunächst mittels eines Drahtes überbrückt, so fließt weiterhin ein Strom durch das Solarmodul-String, so dass die Entnahme nicht erkannt würde. Um diese Lücke zu schließen, misst die bekannte Überwachungseinrichtung auch die Spannung an den Anschlussklemmen des Solarmodul-Strings, wobei die an den Klemmen anliegende Spannung bei der Überbrückung zumindest kurzzeitig abfällt. Dieser kurzzeitige Spannungsabfall wird mittels einer Vergleichsschaltung detektiert. Der Spannungsabfall wird als ein Hinweis für einen Manipulationsversuch gewertet.

Der Nachteil besteht darin, dass bei der Entnahme eines einzelnen Solarmoduls aus dem Solarmodul-String die Überwachung mittels der Stromabtastung lediglich für einen einzelnen Solarmodul-String möglich ist. Eine Überwachung einer Solaranlage mit mehreren parallel geschalteten Solarmodul-Strings mit nur einer Überwachungseinrichtung ist nicht praktizierbar, weil bei Entnahme von Solarzellen aus einem Solarmodul-String zwar der Stromfluss durch diesen Solarmodul-String hindurch unterbrochen ist, jedoch durch die verbleibenden, parallel geschalteten Stings weiterhin ein Strom fließt. Eine Überwachung sämtlicher Solarmodul-Strings gegen Entnahme ist damit nur möglich, wenn für jeden Solarmodul-String eine separate Überwachungseinrichtung vorhanden ist.

Aus der DE 10 2008 062 659 A1 ist eine Vorrichtung zur Diebstahlüberwachung von Solargeneratoren einer Photovoltaikanlage bekannt. Als dortige Problemlösung wird herausgearbeitet, dass die Vorrichtung zur Mittel zur Untersuchung hochfrequenter Eigenschaften des Solargenerators aufweist, wobei es dort um Eigenschaften geht, die durch den Solargenerator inhärente Induktivitäten und Kapazitäten festgelegt sind. Weiterhin weist die vorbekannte Vorrichtung Mittel zur Auswertung von Änderungen der hochfrequenten Eigenschaften der Solaranlage auf. Es geht die bekannte Lehre von der Kenntnis aus, dass ein photovoltaischer Generator aufgrund der elektrischen Verbindungen und seiner flächigen Anordnung der einzelnen Solarzellen innerhalb der Module unvermeidbare parasitäre Induktivitäten und Kapazitäten aufweist. Diese unvermeidbaren parasitären Induktivitäten und Kapazitäten bestimmen die hochfrequenten Eigenschaften des Solargenerators, und zwar insbesondere dessen Wechselstromwiderstand. Ändern sich die Eigenschaften in unzulässiger Weise, dann kann dies zur Erzeugung von Alarmsignalen genutzt werden.

Eine Weiterbildung nach DE 10 2008 062 659 A1 ermöglicht die Überwachung des Solargenerators mit mehreren unterschiedlichen Frequenzen. Dies soll dann vorteilhaft sein, wenn eine einzelne, willkürlich gewählte Frequenz zufällig in einem Bereich liegt, der zu schlecht auswertbaren Ergebnissen führt. Es nützt zusammenfassend die Lehre nach DE 10 2008 062 659 A1 den zu überwachenden Solargenerator quasi mit seinen Eigenresonanzen als frequenzbestimmendes Bauteil, wofür Impedanzmessungen erforderlich werden, und zwar im Sinne einer Verarbeitung charakteristischer Signal- bzw. Anlagenparameter.

Aus Holger Geisler et al. "A Novel High Frequency pseudo Noise Correlator Hardware Design for cable fault diagnoses" ist es bekannt, Kreuzkorrelationsfunktionen zu nutzen, um hochfrequente Eigenschaften elektrischer Verbindungen zu ermitteln. Bei einer dort als Testsignal verwendeten Pseudo-Zufallsfolge ist ein großer Teil der Signalenergie im Gleichanteil sowie bei vergleichsweise niedrigen Frequenzen konzentriert und trägt somit nicht zur Erfassung hochfrequenter Eigenschaften einer zu überprüfenden Solaranlage bei.

Der vorliegenden Erfindung liegt daher die Aufgabe zugrunde, ein verbessertes Verfahren zur Demontagedetektion für aktive und inaktive Photovoltaikanlagen und ein dazugehöriges Detektionsgerät zu schaffen, das zur effizienten Überwachung von Solarmodul-Arrays mit parallel geschalteten Solarmodul-Strings geeignet ist.

Diese Aufgabe wird durch die Merkmale der unabhängigen Ansprüche 1, 7 und 11 gelöst. Vorteilhafte Ausgestaltungen ergeben sich aus den Unteransprüchen.

Erfindungsgemäß wird die oben genannte Aufgabe gelöst durch ein Verfahren zur Demontagedetektion für aktive oder inaktive Photovoltaikanlagen mit mehreren Solarmodulen, die ein Solarmodul-Array bilden, wobei das Solarmodul-Array wenigstens einen parallel geschalteten Solarmodul-String von in Reihe geschalteten Solarmodulen aufweist, mit den folgenden Schritten: Bereitstellen eines sich zeitlich zufällig ändernden Testsignals, Einspeisen des Testsignals in den Stromkreis einer PV-Anlage, Empfangen eines Antwortsignals aus dem Stromkreis der PV-Anlage in Reaktion auf das Testsignal, Ermitteln einer charakteristischen Kreuzkorrelationsfunktion (KKF) des Antwortsignals mit dem Testsignal, Aufzeichnen von Abweichungen von der charakteristischen Kreuzkorrelationsfunktion (KKF), und Erzeugen eines Alarmsignals als Indikator für einen Demontageversuch, wenn die Abweichungen einen vorbestimmten Schwellenwert überschreiten, wobei das Testsignal ein Pseudozufallssignal mit Split-Phase oder Manchester-Kodierung ist, und das Testsignal sowie das Antwortsignal kontaktlos ein- bzw. ausgekoppelt werden, wobei die Übertragung von Test- und Antwortsignal zum Eln- und Auskoppeln in den bzw. aus dem Stromkreis der Photovoltaikanlage bidirektional erfolgt. Der Kerngedanke der Erfindung besteht in der Anwendung der Korrelationstechnik auf Photovoltaikanlagen als zu identifizierende Systeme mit individuellen charakteristischen Merkmalen. Dabei wird für jede PV-Anlage eine charakteristische Kreuzkorrelationsfunktion (KKF) gemessen, die als eine Sollkurve dient und den Normalzustand bzw. den ungestörten Zustand, bei dem eine unveränderte Anzahl von zusammen geschalteten Solarmodulen vorhanden ist, angibt. Durch Manipulation, wie z.B. das Entwenden einzelner Solarmodule, erfolgt eine Veränderung der charakteristischen Merkmale des Systems, was wiederum eine Abweichung der gemessenen Kreuzkorrelationsfunktion (KKF) von der charakteristischen Kreuzkorrelationsfunktion (KKF) des Systems "Photovoltaikanlage" bewirkt. Diese Abweichung kann als ein Anzeichen für einen Manipulationsversuch gewertet werden.

Vorteilhafterweise kann das beanspruchte Demontagedetektionsverfahren auf PV-Anlagen mit einer beliebigen Anzahl von Solarmodulen und parallelen Solarmodul-Strings angewendet werden. Damit ist eine Überwachung einer Vielzahl von PV-Anlagen verschiedenster Hersteller unterschiedlichster Anlagentopologien möglich. Darüber hinaus ermöglicht das erfindungsgemäße Verfahren eine möglichst automatische Anpassung an jede Anlage durch "Lernen" der Eigenschaften des zu überwachenden Systems bzw. der zu überwachenden PV-Anlage. Damit ist auch eine einfache Möglichkeit gegeben, die Nachrüstung einer PV-Anlage mit weiteren Solarmodulen oder auch eine Verringerung der Anzahl der verwendeten Module in das Überwachungsverfahren mit einzubeziehen. So kann z.B. nach jeder Veränderung der Modulzahl zunächst ein Initialisierungsschritt erfolgen, bei dem die charakteristische Kreuzkorrelationsfunktion (KKF) erneut bestimmt wird.

Die Korrelationstechnik verfolgt dabei den folgenden systemtheoretischen Ansatz bei Anwendung auf ein lineares zeitinvariantes System (LTI-System).

Das LTI-System wird durch seine Impulsantwort h(t) charakterisiert. Bei Anlegen des Eingangssignals s(t) an das System lässt sich das Ausgangssignal g(t) mathematisch durch die Faltung des Eingangssignals mit der Impulsantwort beschreiben. Charakteristisch für das Verfahren ist die Bestimmung der Kreuzkorrelationsfunktion (KKF) des Ausgangssignals des Systems mit dem Eingangssignal. Da die Faltungsoperation assoziativ, d.h. die Reihenfolge der Faltungsoperationen beliebig ist, ist es aus systemtheoretischer Sicht gleichgültig, in welcher Reihenfolge die Operation Korrelation und Faltung durchgeführt werden. Die Kreuzkorrelationsfunktion (KKF) könnte daher auch durch eine Faltung der Autokorrelationsfunktion (AKF) des Eingangssignals mit der Impulsantwort des zu identifizierenden Systems entstanden sein. Wird das Eingangssignal nun so gewählt, dass seine Autokorrelationsfunktion einen Diracstoß ausreichend annähert, so entspricht die Kreuzkorrelationsfunktion bis auf einen eventuellen Proportionalitätsfaktor der zu bestimmenden Impulsantwort h(t) des Systems. Für die Anwendung der Korrelationstechnik auf das Demontagedetektionsverfahren für PV-Anlagen wird hierin das Eingangssignal des Systems als Testsignal und das Ausgangssignal des Systems als Antwortsignal bezeichnet.

Als Testsignal kommen verschiedenste Signale in Frage, z.B. weißes Rauschen, Chirpsignale oder aber - anstatt reiner Zufallssignale - vorzugsweise sogenannte Pseudozufallsfolgen, da sich diese digital, z.B. mittels programmierbarer Logikschaltungen, reproduzierbar erzeugen/verarbeiten lassen, ähnliche Eigenschaften wie weißes Rauschen besitzen, und aufgrund der Zufälligkeit des Signals dennoch eine Umgehung des Überwachungsschutzes durch Manipulation oder Nachahmung des Testsignals erschweren.

Die Pseudozufallssignale (PN-Folgen) besitzen Eigenschaften, die im Wesentlichen denen von weißem Rauschen entsprechen, jedoch sind sie im Gegensatz dazu technisch einfacher zu generieren und für den Einsatz programmierbarer Logik gut geeignet. Bei den Pseudozufallssignalen handelt es sich um rauschartige Signale mit einem breitbandigen Signalspektrum. Vorteilhafterweise können die Pseudozufallssignale definiert sein als ein Wechsel der Zustände 0 und 1, so dass eine Korrelation in einfacher Weise rechnergestützt erfolgen kann.

Das Testsignal und das Antwortsignal werden kontaktlos, d.h. kapazitiv oder vorzugsweise induktiv in den Stromkreis der PV-Anlage einkoppelt und aus dem Stromkreis der PV-Anlage ausgekoppelt. Der Vorteil der induktiven Kopplung besteht darin, dass eine hohe Empfindlichkeit erreicht wird während gleichzeitig geringe elektromagnetische Emissionen erzeugt werden. Besonders günstig wirkt sich die Verwendung der Pseudozufallsfolgen zusammen mit den induktiven Mitteln zum Ein- und Auskoppeln von Test- und Antwortsignal im Hinblick auf die elektromagnetische Abstrahlung aus, da die Energie breitbandig verteilt und damit der Störpegel nicht auf einzelne Frequenzen konzentriert ist, was andernfalls zu Verletzungen der entsprechenden Grenzwerte führen würde.

Die Aus- und Einkopplung der Signale erfolgt vorzugsweise in einem Abschnitt der elektrischen Verbindung zwischen dem Solarmodul-Array und dem Wechselrichter der PV-Anlage. Da insbesondere durch die Nichtverdrahtung bzw. die kontaktlose Kopplung nicht in die elektrische Verdrahtung der PV-Anlage eingegriffen werden muss, sind die Sicherheitsanforderungen für die Installation und den Betrieb der Überwachungsanlage niedriger. Ebenso ist die Gefahr durch Blitzschläge und Überspannungen geringer, da keine direkte elektrische Verbindung zur PV-Anlage mit ihrer exponierten Lage besteht. Da in den Modulsträngen von PV-Anlagen mit Gleichspannungen von bis zu 1000 V gerechnet werden muss, bietet die galvanisch getrennte Ein- und Auskopplung der Test- und Antwortsignale eine maximale Sicherheit.

Weiterhin erfolgt das Ein- und Auskoppeln von Test- und Antwortsignal bidirektional, so dass eine Übertragung von Test- und Antwortsignal über eine, in Grenzen beliebig lange, Koaxialleitung erfolgen kann. Hierdurch kann der Installationsaufwand gering gehalten werden. Bei einer zur Ein-/Auskopplung der Test- und Antwortsignale erforderlichen abgesetzten Schaltung sind größere Leitungslängen ohne eine Beeinträchtigung der Messempfindlichkeit möglich.
Die charakteristische Kreuzkorrelationsfunktion (KKF) repräsentiert den ungestörten Zustand der PV-Anlage oder den Normalzustand mit den vollzähligen und funktionsfähigen Solarmodulen, wobei die während eines Detektionszeitraums ermittelten Kreuzkorrelationsfunktionen (KKF) mit der charakteristischen Kreuzkorrelationsfunktion (KKF) verglichen und Abweichungen von der charakteristischen Kreuzkorrelationsfunktion (KKF) infolge einer Störung der PV-Anlage durch Manipulation detektiert werden. Die charakteristische Kreuzkorrelationsfunktion (KKF), die im ungestörten Zustand aufgenommen wurde, stellt einen "Fingerabdruck" der PV-Anlage dar. Jegliche Abweichungen von diesem "Fingerabdruck" werden registriert und als eine Störung, wie z.B. als Versuch der Demontage eines einzelnen Solarmoduls, gewertet. Da sich sowohl eine Unterbrechung zwischen Modulen als auch das Überbrücken von Modulen auf die Kreuzkorrelationsfunktion (KKF) auswirkt, können beide Manipulationsarten sicher detektiert werden und aufgrund ihrer unterschiedlichen Auswirkung auf die Kreuzkorrelationsfunktion (KKF) als Überbrückung oder Entnahme erkannt werden.
Eine Möglichkeit besteht darin, zunächst die charakteristische Kreuzkorrelationsfunktion (KKF) im ungestörten Zustand der PV-Anlage zu ermitteln und als eine Sollkurve abzuspeichern. In einem festgelegten Detektionszeitraum, der sich z.B. über eine Nacht erstreckt, wird dann die Kreuzkorrelationsfunktion (KKF) ermittelt und mit der gespeicherten Kreuzkorrelationsfunktion (KKF), die als Vergleichswert bzw. als die unveränderliche Sollkurve fungiert, verglichen. Vorzugsweise ist jedoch die charakteristische Kreuzkorrelationsfunktion (KKF) eine langzeitgemittelte Kurve und die aktuelle, zum Detektionszeitpunkt ermittelte Kreuzkorrelationsfunktion eine kurzzeitgemittelte Kurve. Die langzeitgemittelte Kreuzkorrelationsfunktion (KKF) ist die Soll- bzw. Referenzkurve und die kurzzeitgemittelte Kreuzkorrelationsfunktion (KKF) ist die Detektionskurve. Bei Abweichungen der Detektionskurve von der Sollkurve wird ein Alarmsignal abgegeben. Vorteilhafterweise wird durch die langzeitgemittelte, charakteristische Kreuzkorrelationsfunktion (KKF) ein kontinuierlicher dynamischer Fingerabdruck der PV-Anlage ermittelt, so dass Veränderungen im Betrieb der Solaranlage, die nicht auf eine Manipulation durch Diebstahl verursacht sind, wie z.B. Temperaturschwankungen oder Lichtverhältnisse in der Dämmerung, kontinuierlich in der charakteristischen Kreuzkorrelationsfunktion (KKF) berücksichtigt werden.

In dem Fall, dass eine Abweichung der im Detektionszeitraum ermittelten Kreuzkorrelationsfunktion (KKF) von der charakteristischen (Soll-) Kreuzkorrelationsfunktion (KKF) einen vorbestimmten Schwellenwert überschreitet, wird ein Alarmsignal erzeugt, das zur Anzeige eines Demontageversuchs einer Alarmiereinrichtung zugeführt wird.

Bei einer bevorzugten Ausführungsform des erfindungsgemäßen Detektionsverfahrens werden die Amplituden des Testsignals und der Arbeitspunkt der PN-Dioden der Solarmodule so gewählt, dass die Signalspannung nur geringfügig, insbesondere nur in einem linearen Abschnitt der PN-Diodenkennlinie um den Arbeitspunkt herum variiert. Da die Diodenkennlinien der PV-Module nichtlinear sind, kann hierdurch der Einfluss der Nichtlinearität verringert werden.

In einer weiteren Ausgestaltung umfasst das Verfahren zusätzlich das Ermitteln der Abhängigkeit des Betriebs bzw. der elektrischen Eigenschaften der PV-Anlage von der Helligkeit und der Temperatur, das Messen von Temperatur und Helligkeit in der Umgebung der Solaranlage, sowie das Berücksichtigen des Einflusses von Temperatur und Helligkeit bei der Ermittlung der charakteristischen Kreuzkorrelationsfunktion (KKF). Da die Arbeitspunkte der Dioden der Solaranlage temperaturabhängig sind, kommt es aufgrund von Temperaturschwankungen zu entsprechenden Veränderungen der charakteristischen Kreuzkorrelationsfunktion (KKF), was im Extremfall zu einem Fehlalarm führen könnte.

Erfindungsgemäß wird weiterhin ein Gerät zur Durchführung des Verfahrens zur Demontagedetektion für aktive oder inaktive Photovoltaikanlagen mit mehreren Solarmodulen, die ein Solar-Array bilden, das wenigstens einen parallel geschalteten Solarmodul-String von in Reihe geschalteten Solarmodulen aufweist, vorgeschlagen, mit einer Koppeleinrichtung zur Einkopplung eines sich zeitlich zufällig ändernden Testsignals in den Stromkreis einer PV-Anlage sowie zur Auskopplung eines Antwortsignals aus dem Stromkreis der PV-Anlage in Reaktion auf das Testsignal, einer Korrelationseinrichtung zur Ermittlung einer charakteristischen Kreuzkorrelationsfunktion (KKF) des Antwortsignals mit dem Testsignal, und einer Auswerte- und Alarmmeldeeinrichtung zur Aufzeichnung von Abweichungen von der charakteristischen Kreuzkorrelationsfunktion (KKF) und Abgabe eines Alarmsignals als Indikation für einen Demontageversuch, wenn die Abweichungen einen vorbestimmten Schwellenwert überschreiten.

Das Gerät zur Demontagedetektion nutzt dabei nicht nur die elektrischen Eigenschaften der Solarmodule als elektrisch leitendes Medium sondern auch der gesamten PV-Anlage einschließlich dem Wechselrichter. Dies bedeutet auch, dass das Demontagedetektionsgerät auch während des Betriebs, d.h. auch am Tage betreibbar ist, wenn das Solarmodul-Array an dem Wechselrichter angeschlossen ist. Dies ist besonders bei weit abgelegenen Inselanlagen von großer Bedeutung, da die tagsüber produzierte Energie zumeist nicht fernüberwacht wird und witterungsbedingte Schwankungen in der Energieerzeugung etwa durch vorbeiziehende Wolken ohnehin üblich sind, so dass anhand der erzeugten Energie keinerlei Rückschlüsse auf einen Manipulationsversuch gezogen werden können.

Bei einer Ausführungsform weist das Gerät einen Anschluss oder ein Anschlussklemmenpaar auf, um das sich zeitlich zufällig ändernde Testsignal dem Gerät zuzuführen. Das Testsignal hat einen sich zeitlich zufällig ändernden Pegel oder eine sich zeitlich zufällig ändernde Amplitude. Vorzugsweise ist das Testsignal ein Pseudozufallssignal. Bei einer bevorzugten Ausführungsform umfasst das Gerät einen integrierten Signalgenerator, insbesondere Impulsgenerator, zur Bereitstellung des Testsignals, so dass das Gerät selbständig funktionsfähig ist.

Die Koppeleinrichtung umfasst ein erstes Koppelelement, welches kapazitive oder vorzugsweise induktive Mittel zur kontaktfreien, galvanisch getrennten Einkopplung des Testsignals und Auskopplung des Antwortsignals der PV-Anlage aufweist. Da in den Modulsträngen mit Gleichspannungen von bis zu 1000 V gerechnet werden muss, ist es aus Sicherheitsgründen vorteilhaft, eine galvanische Trennung zwischen dem Energieschaltkreis, d.h. dem Solarmodul-Array und dem Wechselrichter einerseits und dem Messschaltkreis des Geräts zur Demontagedetektion andererseits vorzusehen. Induktive Mittel im Speziellen eigenen sich wiederum für die Übertragung von rauschähnlichen Testsignalen mit einem breiten Signalspektrum. Diese breitbandigen Signale sind erforderlich, um das System "PV-Anlage" zur Korrelationsmessung möglichst vollständig ausmessen zu können. Die induktive Kopplung stellt weiterhin ein geeignetes Mittel zum bidirektionalen Ein- und Auskoppeln der Testsignale dar, das gleichzeitig eine hohe Empfindlichkeit hat und geringe elektromagnetische Emissionen erzeugt. Schließlich erweist sich auch die Verwendung des Testsignals mit den pseudostochastischen Merkmalen im Hinblick auf die elektromagnetische Abstrahlung vorteilhaft, da die Energie breitbandig verteilt ist und damit der Störpegel nicht auf einzelne Frequenzen konzentriert ist, was andernfalls leicht zur Verletzung der entsprechenden Grenzwerte führen könnte.

Bei einer weiteren Ausgestaltung kann die Koppeleinrichtung ein weiteres, zweites Koppelelement oder ein Referenzelement zur Kompensation von arbeitspunktabhängigen Impedanzänderungen aufweisen.

Die kontaktlose induktive Ein- und Auskopplung von Test- und Antwortsignal mit einer Koppeleinrichtung und einem Kabel ist bei der Nachrüstung bestehender PV-Anlagen mit einem Detektionsgerät von Vorteil, da nicht in die elektrische Verdrahtung der Solarmodul-Arrays eingegriffen werden muss und damit die Sicherheitsanforderungen für die Installation und den Betrieb des Detektionsgeräts wie auch die Gefahr von Schäden durch Blitzschläge und Überspannungen geringer sind.

Das Gerät weist weiterhin eine Messwandlerschaltung auf, um das Testsignal und das Antwortsignal zum Aus- und Einkoppeln auf das erste und ggf. auf das zweite Koppelelement zu schalten. Die Messwandlerschaltung kann ein Filter zur Unterdrückung von Störfrequenzen, z.B. Störfrequenzen des Wechselrichters, aufweisen. Zwischen der Messwandlerschaltung einerseits und der Korrelationseinrichtung und dem Signalgenerator andererseits ist eine Koaxialleitung angeordnet, zur bidirektionalen Übertragung von Test- und Antwortsignalen.

Weiterhin ist zwischen der Messwandlerschaltung einerseits und der Korrelationseinrichtung und dem Signalgenerator andererseits eine Richtkopplerschaltung zur richtungsabhängigen Abzweigung der über die Koaxialleitung bidirektional übertragenen Test- und Antwortsignale angeordnet. Die Richtkopplerschaltung kann mit entsprechenden Verstärkern ausgestattet sein, so dass sich breitbandige Isolationswerte von mindestens 30 bis 40dB im relevanten Frequenzbereich erzielen lassen und somit lokale Unterbrechungen der Modulstrings und Überbrückungen von Modulen über größere Entfernungen feststellbar sind. Gleichzeitig kann mit dieser Anordnung die Anzahl von Fehldetektionen bereits hardwareseitig deutlich reduziert werden, die damit leichter über die weitere Signalverarbeitung erkenn- und unterdrückbar sind.

Zum Speichern der charakteristischen Kreuzkorrelationsfunktion (KKF) als Referenzfunktion umfasst die Auswerteeinrichtung eine Speichereinrichtung sowie eine Vergleichseinrichtung, die ausgeführt ist, die in einem Detektionszeitraum ermittelte Kreuzkorrelationsfunktion (KKF) mit dieser Referenzfunktion zu vergleichen und eine Abweichung festzustellen. Die charakteristische Kreuzkorrelationsfunktion (KKF) kann immer dann neu ermittelt und abgespeichert werden, wenn eine Änderung der PV-Anlage durch z.B. Erweiterung vorgenommen wurde, oder bei einer Nachrüstung an einer bestehenden PV-Anlage. Damit kann sich das Detektionsgerät jeder Anlagenarchitektur individuell in einfacher und dennoch wirksamer Weise anpassen.

Es wird weiterhin ein Wechselrichter für die Verwendung in einer Photovoltaikanlage vorgeschlagen, in welchem ein erfindungsgemäßes Gerät zur Demontagedetektion für aktive oder inaktive Photovoltaikanlagen mit mehreren Solarmodulen, die ein Solar-Array bilden, das wenigstens einen parallel geschalteten Solarmodul-String von in Reihe geschalteten PV-Modulen aufweist, integriert ist.

Die Erfindung betrifft auch eine Photovoltaikanlage mit mehreren Solarmodulen, die ein Solar-Array bilden, das wenigstens einen parallel geschalteten String von in Reihe geschalteten Solarmodulen aufweist, das zusätzlich das erfindungsgemäße Gerät zur Demontagedetektion für aktive oder inaktive Photovoltaikanlagen aufweist.

Weitere Merkmale und Vorteile der Erfindung ergeben sich aus den nachfolgenden Ausführungsbeispielen und Zeichnungen, in denen
- Fig. 1: eine schematisierte Darstellung einer Photovoltaikanlage mit dem erfindungsgemäßen Gerät zur Demontagedetektion zeigt;
- Fig. 2: ein Blockschaltbild einer Ausführungsform des Geräts zur Demontagedetektion in Fig. 1 zeigt;
- Fig. 3: ein detailliertes Blockschaltbild der Messwandlerschaltung in Fig. 2 zeigt;
- Fig. 4: ein detailliertes Blockschaltbild der Richtkopplerschaltung in Fig. 2 zeigt;
- Fig. 5: eine Prinzipdarstellung einer Einrichtung zur Erzeugung eines Pseudozufallssignals für die Verwendung als Testsignal zeigt;
- Fig. 6A-D: gemessene Kennlinien von Kreuzkorrelationsfunktionen (KKF) im ungestörten Zustand und im gestörten Zustand zeigen.

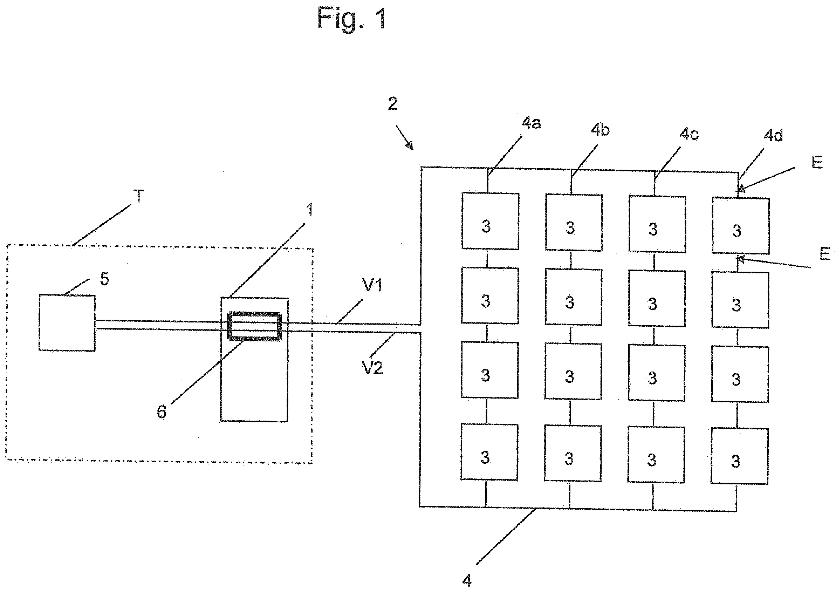

Fig. 1 zeigt das Gerät 1 zur Diebstahlsicherung, welches an eine Photovoltaikanlage 2 zur Umwandlung von Sonnenenergie in elektrische Energie angeschlossen ist. Die Photovoltaikanlage 2 umfasst ein Solarmodul-Array 4, das beispielhaft in der Figur in vier Solarmodul-Strings 4a-4d angeordnet ist. Jedes Solarmodul-String 4a-4d umfasst, lediglich beispielhaft, wiederum vier in Reihe geschaltete Solarmodule 3. Das Solarmodul-Array 4 ist über elektrische Verbindungsleitungen V1 & V2 an einen Wechselrichter 5 angeschlossen, um aus dem von den Solarmodulen 3 gewonnenen Gleichstrom einen Wechselstrom zur Einspeisung in das öffentliche Stromversorgungsnetz zu erzeugen. Der Wechselrichter 5 ist vorzugsweise, jedoch nicht notwendigerweise, in einem abgeschlossenen Technikraum T untergebracht.

Zum Zwecke der Sicherung der einzelnen Solarmodule 3 gegen Diebstahl ist zwischen dem Solarmodul-Array 4 und dem Wechselrichter 5 ein Gerät 1 zur Demontagedetektion angeordnet, das vorzugsweise, jedoch nicht notwendigerweise, zusammen mit dem Wechselrichter 5 in dem abgeschlossenen Technikraum T untergebracht ist, um es gegen Zugriffe unbefugter Personen zu schützen.

Die Photovoltaikanlage 2 und das Detektionsgerät 1 werden mit voneinander getrennten, unabhängigen Stromkreisen, nämlich einem Energiestromkreis der Photovoltaikanlage 2 und einem Detektionsstromkreis des Detektionsgeräts 1 betrieben. Zum Anschließen an die Photovoltaikanlage 2 umfasst das Detektionsgerät 1 eine Koppeleinrichtung 6.

Im Speziellen ist die Koppeleinrichtung 6 ausgeführt, die Ein- und Auskopplung von Test- und Antwortsignalen in bzw. aus dem Energiestromkreis der Photovoltaikanlage 2 kontaktlos derart durchzuführen, dass eine galvanische Trennung zwischen den beteiligten Stromkreisen geschaffen wird. Hierzu umfasst die Koppeleinrichtung 6 - da es sich bei den Test- und Antwortsignalen um zeitlich sich ändernde Signale bzw. um Signale, deren Amplituden oder Pegel sich über die Zeit verändern, handelt - ein Koppelelement 6a mit einem induktiven Mittel.

Das hochfrequente Testsignal kann auch während des Tages, wenn die PV-Anlage 2 Strom erzeugt, eingespeist werden, indem es dem Gleichstromsignal der PV-Anlage 2 überlagert wird. Vorzugsweise ist das Detektionsgerät 1 jedoch im Nachtbetrieb im Einsatz.

Das Funktionsprinzip des in Fig. 1 gezeigten Detektionsgeräts 1 besteht darin, ein Testsignal in den Energiestromkreis der PV-Anlage 2 einzuspeisen und in Reaktion darauf ein Antwortsignal zu erhalten, welches eine für die PV-Anlage 2 charakteristische Systemantwort darstellt. Im ungestörten Betrieb der PV-Anlage 2 ermittelt das Detektionsgerät 1 aus dem Testsignal und dem Antwortsignal eine charakteristische Kreuzkorrelationsfunktion (KKF) als eine Sollkurve betreffend den Normalzustand der Anlage. Tritt ein Ereignis E auf, wie durch die Pfeile in Fig. 1 angegeben, d.h. wenn ein Solarmodul abmontiert oder überbrückt wird, ist die charakteristische Architektur und damit die charakteristische elektrische Eigenschaft der PV-Anlage verändert. Z.B. erfolgt bei einer Überbrückung des Moduls 3 bei E zunächst ein Kurzschluss, der einen kurzzeitigen Spannungsabfall an den Anschlussklemmen des betreffenden Solarmodul-Strings 4d bewirkt. Durch die Überbrückung Solarmoduls 3 wird jedoch auch die charakteristische elektrische Eigenschaft des Systems "Photovoltaikanlage" als solches bleibend verändert, was in einer veränderten Kreuzkorrelationsfunktion (KKF) zum Ausdruck kommt. Dies gilt bei einem Abmontieren des Moduls 3 bei E gleichermaßen.

In Betrieb ermittelt das Detektionsgerät 1 kontinuierlich die aktuelle Kreuzkorrelationsfunktion (KKF) aus Test- und Antwortsignal und vergleicht diese mit der charakteristischen Soll-Kreuzkorrelationsfunktion (KKF) betreffend den Normalzustand. Im Falle einer Abweichung von ursprünglicher (Soll) und aktueller (Ist) Kreuzkorrelationsfunktion (KKF) wird ein Alarmsignal generiert.

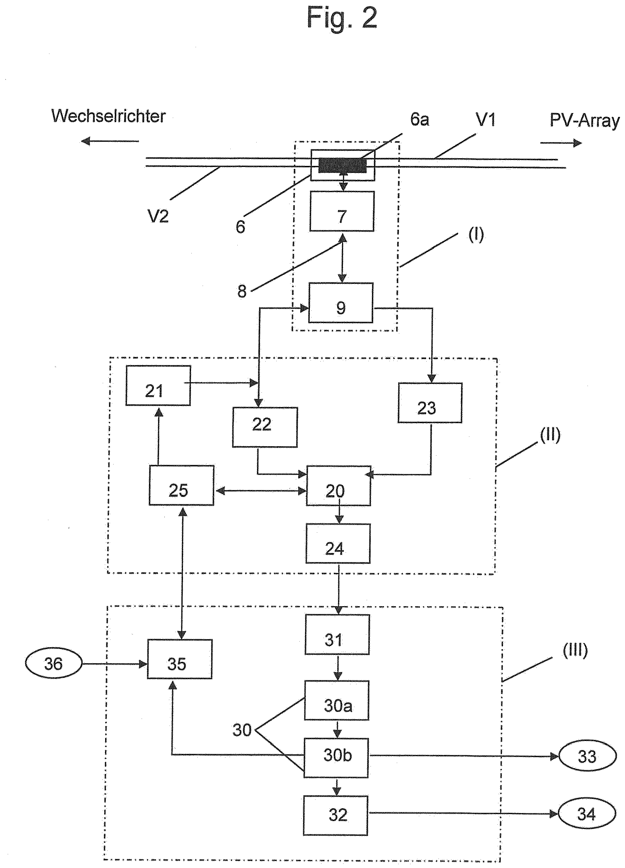

Ein Ausführungsbeispiel des erfindungsgemäßen Detektionsgeräts 1 ist in Fig. 2 gezeigt. Wie in dem Blockschaltbild durch die strichpunktierten Linien angedeutet, umfasst die Schaltung des Gerätes 1 drei Abschnitte, nämlich einen Analogsignalverarbeitungsabschnitt (I), einen Digitalsignalverarbeitungsabschnitt (II) sowie einen Auswerte- und Alarmierabschnitt (III).

Der Analogsignalverarbeitungsabschnitt (I) umfasst die Koppeleinrichtung 6 mit einem ersten, induktiven Koppelelement 6a zur kontaktlosen Ein- und Auskopplung von Test- und Antwortsignal, eine speziell auf die Koppeleinrichtung 6 angepasste Messwandlerschaltung 7 zur Kompensation der Anlagenimpedanz der Photovoltaikanlage 2, sowie eine über eine Koaxialleitung 8 mit der Messwandlerschaltung 7 verbundene Richtkopplerschaltung 9, um die über die Koaxialleitung 8 bidirektional übertragenen Test- und Antwortsignale richtungsabhängig abzuzweigen.

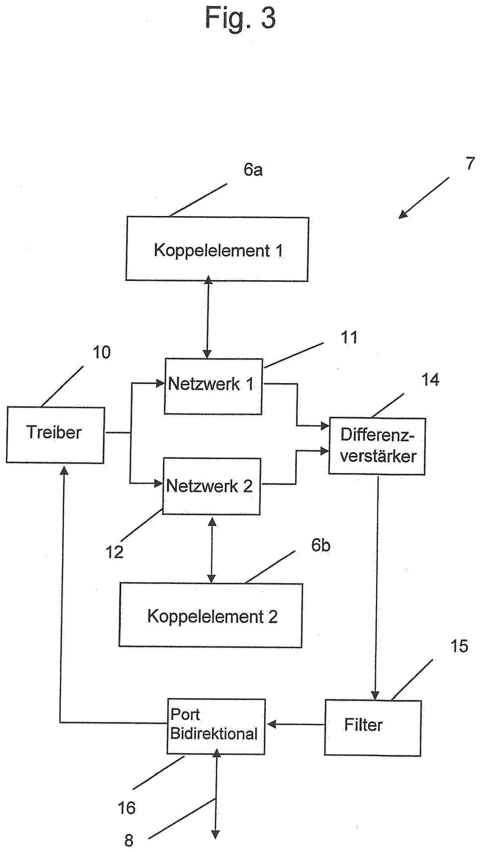

Fig. 3 zeigt im Detail die Messwandlerschaltung 7 des Detektionsgeräts 1. Im Speziellen ist die Messwandlerschaltung 7 eine aktive Messwandlerschaltung mit einer Treiber- und Verstärkerschaltung 11 welche die von dem (nachfolgend beschriebenen) Signalgenerator 21 erzeugten digitalen Testsignale umsetzt und insbesondere verstärkt. Das verstärkte Testsignal wird zum Einkoppeln in den Energiestromkreis über ein erstes Netzwerk 11 auf das erste Koppelelement 6a der Koppeleinrichtung 6 geschaltet. Umgekehrt wird zum Auskoppeln aus dem Energiestromkreis das Antwortsignal von dem Koppelelement 6a auf das erste Netzwerk 11 geschaltet. Zusätzlich kann ein zweites Koppelelement 6b oder ein Referenzelement 6c und ein dazugehöriges zweites Netzwerk 12 vorgesehen sein, um arbeitspunktabhängige Impedanzänderungen zu kompensieren. Hierzu werden die Ausgänge der Netzwerke 11, 12 einem Differenzverstärker 14 zugeführt. Ein optional den Ein- und Auskoppelnetzwerken 11, 12 und dem Differenzverstärker 14 nachgeschaltetes Filter 15 unterdrückt unerwünschte Signalanteile des empfangenen Antwortsignals, wie z.B. Störfrequenzen des Wechselrichters 5. Über einen bidirektionalen Port 16 der Messwandlerschaltung 7, an dem die Koaxialleitung 8 angeschlossen ist, wird sowohl das von dem Signalgenerator 21 erzeugte Testsignal empfangen als auch das empfangene Antwortsignal an die Richtkopplerschaltung 9 übertragen.

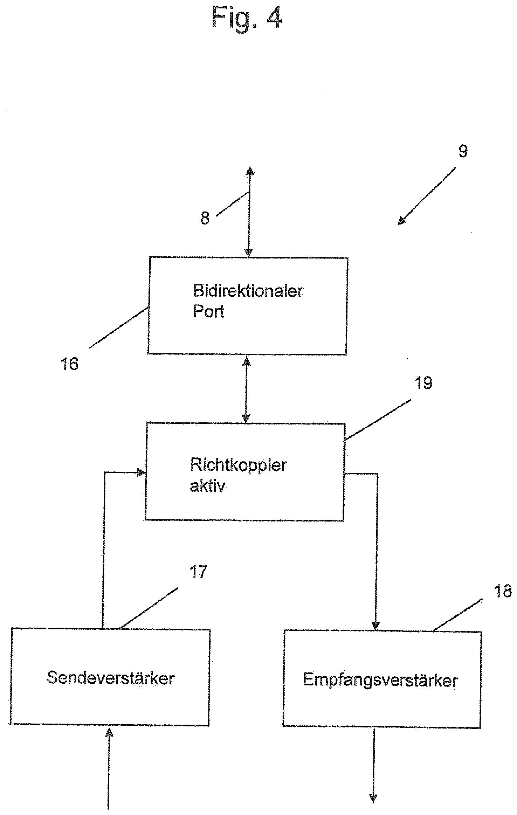

In Fig. 4 ist die Richtkopplerschaltung 9 detaillierter gezeigt. Die Richtkopplerschaltung 9 ist vorgesehen, um eine breitbandige Richtungstrennung zwischen dem gesendeten Testsignal und dem von der PV-Anlage empfangenen Antwortsignal zu realisieren. Sie umfasst einen aktiven Richtkoppler 17 mit mehreren, nicht in der Figur gezeigten, Operationsverstärkern, um über einen bidirektionalen Anschluss (Port) 16 und die daran angeschlossene Koaxialleitung 8 das Testsignal an die Koppeleinrichtung 6 zu übertragen und das Antwortsignal von der Koppeleinrichtung 6 zu empfangen. Dabei unterdrückt der aktive Richtkoppler 19 die Weiterleitung des Testsignals und verstärkt die von dem Testsignal verschiedenen Signalanteile. Über den aktiven Richtkoppler 19 wird das Antwortsignal dem Testsignal hinzugefügt und über die Koaxialleitung 8 übertragen. Die Koaxialleitung 8 ist geeignet, hochfrequente, breitbandige Signale in einem Frequenzbereich von einigen KHz bis zu einigen GHz zu übertragen. Mit dieser Anordnung lassen sich breitbandige Isolationswerte von mindestens 30 bis 40 dB im relevanten Frequenzbereich erzielen.

Wie vorstehend beschrieben, ist das Testsignal nach Durchlaufen der PV-Anlage 1 verändert und bildet das Antwortsignal. Bei dem empfangenen Antwortsignal handelt es sich um ein zeit- und wertdiskretes Signal. Um das Antwortsignal in dem in Fig. 2 gezeigten Digitalsignalverarbeitungsabschnitt (II) weiter verarbeiten zu können, ist ein Analog/Digitalwandler 23, insbesondere einen Komparator, zur Umsetzung des analogen Antwortsignals in ein digitales Antwortsignal vorgesehen.

Bei der Digitalisierung des Antwortsignals, die bei einer endlichen Anzahl von Quantisierungsstufen eine systematische Abweichung von dem realen Signal bewirkt, treten Quantisierungsfehler als Rauschen in Erscheinung. Wird jedoch dem Testsignal ein starkes Rauschen überlagert, ist der Quantisierungsfehler zu vernachlässigen. Es treten durch das starke Rauschen gleich verteilte Fehler auf, wodurch die Quantisierungsfehler heraus gemittelt werden. Das Detektionsgerät 6 umfasst daher auch eine entsprechende, nicht gezeigte Einrichtung, welche dem Testsignal ein Rauschen überlagert.

Der Digitalsignalverarbeitungsabschnitt (II) umfasst einen Signalgenerator 21, der als ein Pseudozufallsgenerator ausgeführt ist, zur Erzeugung eines Testsignals in Form eines Pseudozufallssignals. Pseudozufallssignale eignen sich aufgrund ähnlicher Eigenschaften wie die von weißem Rauschen und ihrer einfachen technischen Realisierbarkeit am besten als Testsignal. Der Pseudozufallsgenerator 21 ist sowohl mit der Analogsignalverarbeitungseinheit (I), um das Testsignal der Photovoltaikanlage 1 zuzuführen, als auch mit einer Verzögerungseinrichtung 22 verbunden.

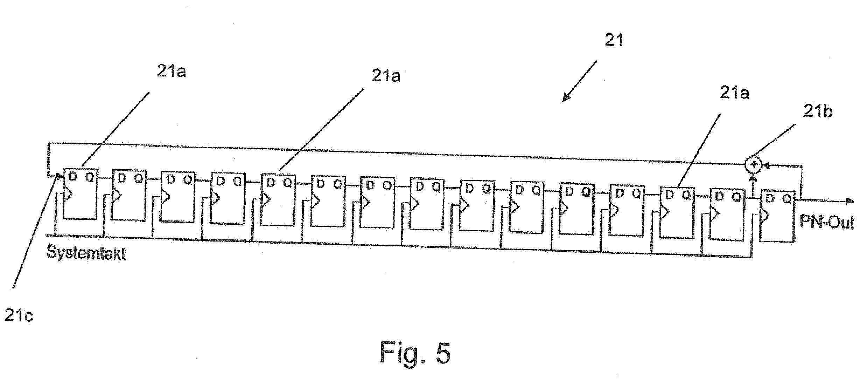

Als Pseudozufallsgenerator 21 können softwaretechnische Realisierungen, wie z.B. arithmetische Zufallsgeneratoren, verwendet werden, oder aber wie bei der Ausführungsform in Fig. 2 hardwaretechnisch realisiert sein, und zwar in Form eines linear rückgekoppelten Schieberegisters, das in Fig. 5 schematisch dargestellt ist. Aufgebaut ist es wie ein normales Schieberegister aus taktgesteuerten D-Flipflops 21a, die an definierten Stellen über eine XOR-Verknüpfung 21b auf den Eingang 21c rückgekoppelt sind.

Wieder Bezug nehmend auf Fig. 2 enthält der Digitalsignalverarbeitungsabschnitt (II) weiterhin eine Verzögerungseinrichtung 22, um das erzeugte Pseudozufallssignal (PN-Folge), welches als das Testsignal dient, taktsynchron zu verzögern und zwischenzuspeichern, um aus dem Antwortsignal die Kreuzkorrelationsfunktion (KKF) zu ermitteln. Als Verzögerungseinrichtung 22 fungiert ein (nicht in der Figur gezeigtes) nicht rückgekoppeltes Schieberegister, das mit dem Pseudozufallssignal gespeist wird und das den am längsten gespeicherten Wert verwirft. Dabei muss jeder Ausgang der einzelnen Speicherelemente zur weiteren Verarbeitung zum Vergleich für andere Blöcke zur Verfügung stehen. Die Länge N des Schieberegisters richtet sich nach der Anzahl der Zähler, also dem Ausschnitt der Korrelationsfunktion, der betrachtet werden soll.

Ein Zählerarray 20 des Digitalsignalverarbeitungsabschnitts (II), das als die Einrichtung zur Ermittlung der Korrelationsfunktion fungiert und dem das taktsynchron verzögerte und zwischengespeicherte Testsignal sowie das digitalisierte Antwortsignal zugeführt wird, erzeugt aus den PN-Folgen und dem empfangenen Signal die Kreuzkorrelationsfunktion (KKF). Hierzu muss das binäre Signal auf Ähnlichkeit überprüft werden und dann ein Zähler inkrementiert oder dekrementiert werden. Für jede Verzögerungsstelle ist ein eigener Zähler vorgesehen. Der Vergleich der beiden Signale, d.h. das Antwortsignal, das jedem Zähler zugeführt wird, und das verzögerte Signal, das von dem Schieberegister ankommt, erfolgt über eine (nicht in der Figur gezeigte) Antivalenz-Verknüpfung, die am Ausgang angeordnet ist und eine Aussage über die Ähnlichkeit der beiden Eingangssignale trifft.

Die Schaltung in Fig. 2 umfasst weiterhin einen Auswerte- und Alarmierabschnitt (III), dem die Daten des Zählerarrays 20 zugeführt werden. Der Auswerte- und Alarmierabschnitt (III) kann in einem PC, vorzugsweise jedoch in einem Mikrocontroller realisiert sein. In einer Auswerteeinrichtung 30a werden die zeitlichen Verläufe von Änderungen der Kreuzkorrelationsfunktion, z.B. infolge des Entwendens oder Überbückens einzelner Solarmodule, aber auch infolge von Temperatur- und Helligkeitsschwankungen und Blitzschlag festgestellt. In einer nachgeschalteten Ereignisdifferenziereinrichtung 30b werden diese Abweichungen entsprechend ihrer Charakteristik einer Ursache zugeordnet. Die Ereignisdifferenziereinrichtung 30b ist in der Lage, Ereignisse aufeinanderfolgend zu erkennen, auszuwerten und ggf. ein Alarmsignal abzugeben, d.h. die Ereignisdifferenziereinrichtung 30b enthält eine Funktion betreffend die Alarmmeldeeinrichtung. Wird ein Ereignis als Überbrückung oder Entnahme eines Solarmoduls erkannt, gibt die Ereignisdifferenziereinrichtung 30b ein Alarmsignal ab, welches über eine Schnittstelle des Detektionsgeräts 1 einer Alarmiereinrichtung 33, z.B. zur Einbindung in eine Alarmschleife, zugeführt wird. Die Ereignisdifferenziereinrichtung 30b kann darüber hinaus andere Störungen wie etwa technische Störungen der PV-Anlage 2 erkennen.

Um umweltbezogene Einflüsse wie etwa Temperatur oder Strahlungsintensität aus dem Messergebnis herausfiltern zu können, sind entsprechende, nicht in der Figur gezeigte, Sensoreinheiten an den Auswerte- und Alarmierabschnitt (III) angeschlossen, die der Ereignisdifferenziereinrichtung 30b zugeführt werden.

Der Auswerte- und Alarmierabschnitt (III) in Fig. 2 verfügt über eine Kommunikationseinrichtung 32, die ausgeführt ist, Ergebnisse der Auswertung an externe Stellen 34 zur weiteren Verwendung zu übertragen. Hierzu kann die Kommunikationseinrichtung 32 eine RS485-Schnittstelle für eine Web-Box, ein GSM-Modul für "Stand-Alone"-Lösungen zum Absetzen von Meldungen, oder eine Ethernet-Schnittstelle umfassen.

Der Auswerte- und Alarmierabschnitt (III) ist in der Lage, einen softwarebasierten Auswertealgorithmus auszuführen. Der Auswertealgorithmus umfasst das Speichern von Messdaten betreffend die charakteristische (Soll) Kreuzkorrelationsfunktion (KKF) und die im Detektionszeitraum ermittelte (Ist) Kreuzkorrelationsfunktion (KKF), das Feststellen von Abweichungen, das Evaluieren der Abweichungen, sowie das Kommunizieren des Auswerteergebnisses. Vorzugsweise betrifft die charakteristische (Soll) Kreuzkorrelationsfunktion (KKF) einer langzeitgemittelten Funktionskurve und die im Detektionszeitraum ermittelte (Ist) Kreuzkorrelationsfunktion (KKF) einer kurzzeitgemittelten Funktionskurve.

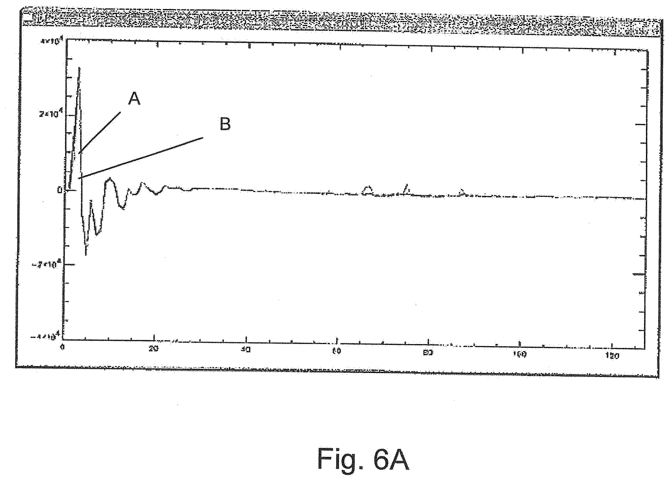

Die Figuren 6A-6E zeigen Kennlinien von möglichen Messergebnissen. Die graphisch dargestellten Messergebnisse wurden durch ein IDL-Programm erzeugt. Die Figuren zeigen jeweils übereinanderliegend eine langzeitgemittelte Kurve A und eine kurzzeitgemittelte Kurve B. In der Langzeitermittlung wird die Referenzkurve bzw. Sollkurve dargestellt. Die Kurzzeitermittlung soll eventuell auftretende Messfehler herausfiltern aber trotzdem dauerhafte Veränderungen nach einer Manipulation der Anlage schnell darstellen.

In Fig. 6A sind die Kennlinien im Sollzustand der Anlage dargestellt. Die beiden Kennlinien A und B liegen übereinander und sind im Wesentlichen identisch, d.h. sie sind annähernd kongruent.

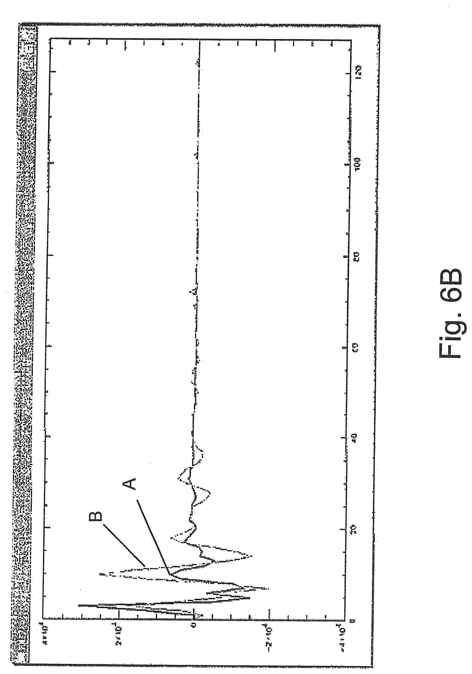

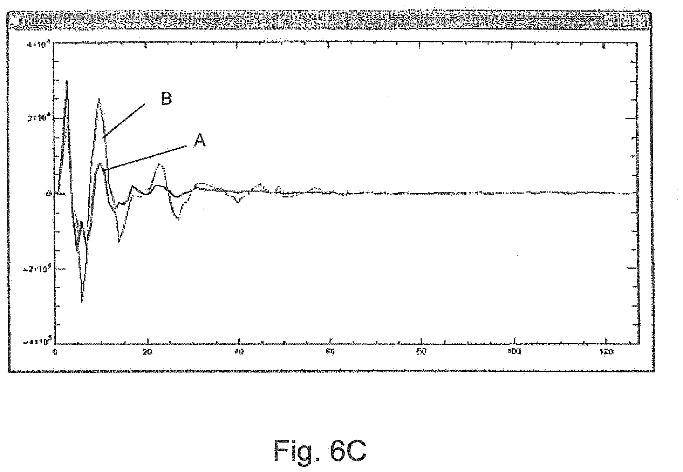

Fig. 6B zeigt eine Manipulation durch Unterbrechung eines ersten Moduls. Durch die Unterbrechung ist eine markante Änderung der kurzzeitgemittelten Kurve B im Vergleich zur langzeitgemittelten Kurve A erkennbar. Fig. 6C zeigt die Unterbrechung an einer anderen Stelle des Solarmodul-Arrays, wobei eine deutliche Veränderung erkennbar ist. Aufgrund der unterschiedlichen Veränderungen bei Unterbrechung von unterschiedlichen Modulen kann jedem Modul eine Charakteristik zugeordnet werden, so dass eine Lokalisierung der Manipulationsstellen möglich ist.

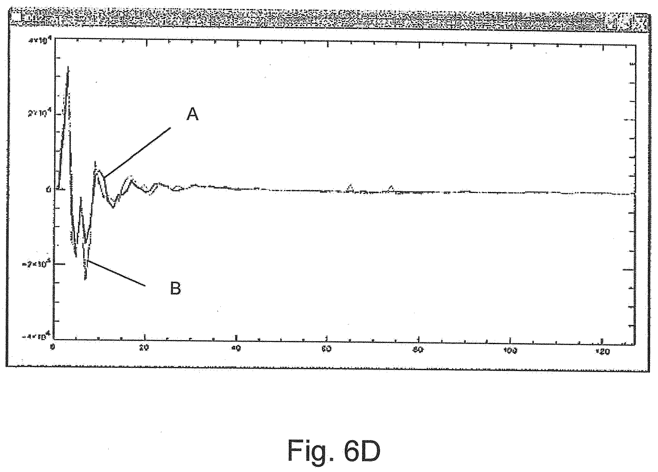

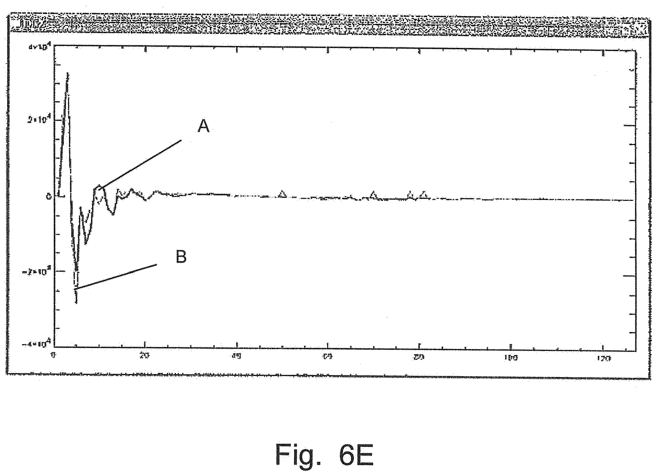

Fig. 6D und 6E zeigen Manipulationen des Solarmodul-Arrays durch Überbrückung einzelner Module an verschiedenen Stellen. Obwohl die Unterschiede zu den Referenzkurven A bei der Überbrückung im Vergleich zur Unterbrechung, wie in den Fig. 6B und 6C gezeigt, geringer sind, können sie dennoch mit dem menschlichen Auge festgestellt werden. Eine Evaluierung der Abweichungen und zudem eine Lokalisierung der Manipulationsstellen ist ohne Weiteres möglich.

Eine Steuerung 25, 35, die sowohl in dem Digitalsignalverarbeitungsabschnitt (II) als auch in dem Auswerte- und Alarmierabschnitt (III) vorgesehen ist, wird über ein Bedienfeld 36 von einem Benutzer bedient. Durch die Steuerung 25, 35 können Messungen definiert gesteuert werden. Hierzu ist die Steuerung 25, 35 mit dem Signalgenerator 21 zur Erzeugung des Testsignals, mit dem Zählerarray 20 zur Ermittlung der Kreuzkorrelationsfunktion (KKF), sowie über einen Rückführungszweig mit der Ereignisdifferenzierungseinheit 30b verbunden.

Bei einer Ausgestaltung der Erfindung kann zwischen dem Wechselrichter und der Koppeleinrichtung eine Impedanzstabilisiereinrichtung vorgesehen sein, die im Wesentlichen aus Ferritkernen besteht und eine Empfindlichkeitsverbesserung durch Vergrößerung der Impedanz in der Zuleitung des Wechselrichters gestattet.

Bei den Testsignalen handelt es sich bevorzugt um pseudozufallscodierte Signale im Frequenzbereich zwischen etwa 100 kHz und 100 MHz. Die pseudozufallscodierten Testsignale sind Split-Phase- bzw. Manchestercodiert sein.

Die Amplitude am Ausgang des erfindungsgemäßen Treibers liegt im Bereich von 100 mVpp und 2 Vpp. Die resultierende Spannung im Photovoltaikstromkreis ist auf Grund der Koppeldämpfung von ca. 4 dB bis 20 dB entsprechend geringer. Die über dem Empfangszweig gemessenen Signale beinhalten nicht unterdrückte Anteile des Sendesignals und von der Anlage reflektierte bzw. beeinflusste Signalanteile im Bereich einiger Millivolt am Ausgang des Differenzverstärkers.

Die vorstehend erläuterten Komponenten gemäß Ausführungsbeispiel sollen nachstehend noch einmal zusammengefasst definiert werden.

Der Analogsignalverarbeitungsabschnitt dient der Signalaufbereitung, Übertragung, Einkopplung, Signaltrennung, der Verstärkung und Filterung. Die Koppeleinrichtung 6 ermöglicht eine galvanisch getrennte, vorzugweise magnetische Ein- und Auskopplung der Testsignale in den Photovoltaikstromkreis.

Die Messwandlerschaltung erhält das Testsignal über eine bidirektionale Leitungsverbindung. Die Trennung von Testsignal und empfangenem Signal erfolgt über eine Schaltung zur Richtungstrennung. Die Messwandlerschaltung dient auch dem Einspeisen des Testsignals in das oder die Koppelelemente, und zwar optional mit Vorverzerrung des Signals zur Signalkorrektur. Weiterhin können optional nachgeschaltete Filter durch Bandbegrenzung unerwünscht empfangene Störsignale, z.B. Störspannungen des Wechselrichters unterdrücken.

Die Koaxialleitung 8 stellt eine breitbandige Leitungsverbindung zwischen der Messwandlerschaltung und der Richtkopplerschaltung dar. Testsignal und empfangenes Antwortsignal werden gleichzeitig übertragen.

Bei der Richtkopplerschaltung 9 handelt es sich um eine aktive Schaltung zur richtungsabhängigen Zusammenführung und Trennung des Testsignals und des empfangenen Antwortsignals. Über den Hin-Zweig der Schaltungsanordnung mit Operationsverstärkern wird das Testsignal über einen bidirektionalen Port in die angeschlossene Koaxialleitung übertragen. Gleichzeitig wird das empfangene Antwortsignal über den Rück-Zweig der Anordnung vom Testsignal getrennt und zum Empfangsverstärker geleitet. Die gesamte Schaltungsanordnung gewährleistet breitbandige Isolationswerte von mindestens 30 dB bis 40 dB zwischen dem Testsignal und dem gemessenen Antwortsignal.

Der Treiber 10 dient als Verstärker zur Pegelanpassung und Signalverteilung zu den Koppelelementen.

Die Netzwerke 11 und 12 stellen Anpassungsnetzwerke zur Signaleinspeisung in das Koppelelement und zum Abgreifen des Antwortsignals aus der zu überwachenden Anordnung dar.

Mit Hilfe des Differenzverstärkers 14 erfolgt eine Verstärkung der Signalanteile, die von den Koppelelementen aus dem System empfangen werden, und eine gleichzeitige Unterdrückung des anliegenden Sendesignals.

Das optionale Filter 15 dient der Unterdrückung von unerwünschten Signalen, die über Leitungen empfangen werden oder vom Wechselrichter ausgehen, außerhalb des für die Messung relevanten Bereiches.

Der bidirektionale Port 16 ist eine Verstärkerschaltung mit zugehörigem Netzwerk zur Signaltrennung und Anpassung des Verstärkers an die Leitungsimpedanz.

Der Sendeverstärker 17 passt das Logiksignal des Testsignalgenerators mit steilen Flanken und durch Bandbegrenzung und über Umsetzung des Pegels an die analoge Signalübertragung zum Messwandler an.

Mit Hilfe des Empfangsverstärkers 18 wird der Pegel des separierten, empfangenen Antwortsignals verstärkt.

Das Zählerarray 20 ist eine Anordnung zur Ermittlung der Kreuzkorrelationsfunktion durch Überprüfung der Ähnlichkeit von verzögertem Testsignal als Referenz und dem digitalisierten Antwortsignal mittels Antivalenz(XOR-)Verknüpfung und der damit gesteuerten De- oder Inkrementierung der Zählerstände. Bei Zählerüberlauf eines Zählers oder über feste Zeitintervalle erfolgt eine Übernahme aller Zählerstände innerhalb einer Taktperiode in ein Pufferregister, so dass sofort eine neue Messung gestartet werden kann.

Der Signalgenerator 21 ist bevorzugt als Pseudozufallsgenerator ausgebildet, und zwar beispielsweise realisiert durch ein linear rückgekoppeltes Schieberegister.

Die Verzögerungseinrichtung 22 stellt ein nicht rückgekoppeltes Schieberegister mit einer dem Zählerarray entsprechenden Anzahl an taktsynchronen Verzögerungen mit optionalem zusätzlichen Offset zum Ausblenden des Nahbereichs zwischen Signalgenerator und Zählerarray dar.

Mit Hilfe des Analog-/Digitalwandlers 23 erfolgt eine Wandlung des analogen verstärkten Antwortsignals in ein digitales Signal zur Weiterverarbeitung. Im Ausführungsbeispiel wandelt ein Komparator das Signal in ein 1-bit quantisiertes Digitalsignal um.

Das Pufferregister 24 dient der parallelen Übernahme der Zählerstände-Zwischenspeicherung. Die Daten werden sequentiell zur Verarbeitung ausgelesen. Nach Speicherung der Zählerstände kann bereits eine neue Messung gestartet werden.

Die Steuerung 25 ist eine Logik zur Steuerung der Messvorgänge, wie z.B. Reset der Funktionsblöcke, Start des PN-Signalgenerators, Stoppen der Messung bei Zählerüberlauf und Überleiten der Zählerstände in das Pufferregister. Über die Steuerlogik können auch Änderungen in der Konfiguration übriger Komponenten durchgeführt werden, z.B. die Messauflösung geändert, die Messintervallzeit variiert, die Überlaufschwelle eingestellt werden und so weiter.

Der Auswerte- und Alarmierabschnitt wird z.B. auf Basis eines Microcontrollers realisiert und führt den eigentlichen Auswertealgorithmus aus, der auf Softwarebasis realisiert ist.

Die Auswerteeinrichtung 30a dient der Vorverarbeitung der Daten aus den Zählerständen, wie digitaler Filterung und gleitender bzw. rekursiver Mittelwertbildungen, deren Ergebnisse z.B. Langzeit- und Kurzzeit-bezogen abgespeichert werden. Durch statistische Verfahren wird ein kontinuierlicher Vergleich der als Sollwertevorrat dienenden langzeitermittelten Kreuzkorrelationsfunktion mit der als Istwert erfassten kurzzeitgemittelten Kreuzkorrelationsfunktion durchgeführt. Über festlegbare Parameter und Schwellwerte als Detektionskriterium kann damit ein Ereignis festgestellt werden.

Da auch umweltbezogene Ereignisse oder durch diese bedingte schnelle Arbeitspunktänderungen in der Photovoltaikanlage nicht vollständig kompensiert oder unterdrückt werden können, ist eine weitere Betrachtung der detektierten Ereignisse erforderlich, was mit der Ereignisdifferenzierung 30b erfolgt. Durch entsprechende Verfahren werden aus detektierten Ergebnissen Fehlalarme unterdrückt und bei echten Manipulationen durch Unterbrechen von Verbindungen beim Entfernen von Modulen oder beim Kurzschließen von Modulen oder Modulketten die Alarmiereinrichtung aktiviert. Die Ergebnisse können an eine Kommunikationseinrichtung; z.B. zur Protokollierung oder Meldung weitergeleitet werden.

Die Datenübernahme 31 stellt sich als Schnittstelle zum FPGA / ASIC, zur Übernahme der Zählerstände oder Daten in den Microcontroller durch z.B. parallele Übertragung mit Hardware-Handshake aus Gründen der Geschwindigkeit dar.

Die Kommunikationseinrichtung 32 dient der Übertragung der Ergebnisse der Auswertung über entsprechende Schnittstellen oder über ein GSM-Modul oder ein entsprechendes Netzwerk.

Ein von der Auswerte- und Alarmiereinheit als Manipulation charakterisiertes Ereignis wird über die Alarmiereinrichtung 33 z.B. an eine Alarmschleife weitergegeben oder auf andere geeignete Weise als Alarmmeldung abgesetzt. Die Alarmiereinrichtung verfügt über Möglichkeiten der Sabotageerkennung.

Die Spannungsversorgung 38 stellt die Energieversorgung des Systems über übliche Schutzkleinspannung sicher. Als ergänzende Sabotagesicherheit kann eine Notversorgung über einen integrierten Akkumulator realisiert werden.

## Patentansprüche

1. Verfahren zur Funktions- und Demontagedetektion für aktive oder inaktive Photovoltaikanlagen (2) mit mehreren Solarmodulen (3), die ein Solarmodul-Array (4) bilden, wobei das Solarmodul-Array (4) wenigstens ein parallel geschaltetes Solarmodul-String (4a-4d) von in Reihe geschalteten Solarmodulen (3) aufweist, mit den folgenden Schritten:
- Bereitstellen eines sich zeitlich zufällig ändernden Testsignals,
- Einspeisen des Testsignals in den Stromkreis der Photovoltaikanlage (2),
- Empfangen eines Antwortsignals aus dem Stromkreis der Photovoltaikanlage (2) in Reaktion auf das Testsignal,
- Ermitteln einer charakteristischen Kreuzkorrelationsfunktion (KKF) des Antwortsignals mit dem Testsignal,
- Aufzeichnen von Abweichungen von der charakteristischen Kreuzkorrelationsfunktion (KKF), und
- Erzeugen eines Alarmsignals als Indikation für einen Demontageversuch, wenn die Abweichungen einen vorbestimmten Schwellenwert überschreiten, wobei das Testsignal ein Pseudozufallssignal mit Split-Phase- oder Manchester-Kodierung ist, und das Testsignal sowie das Antwortsignal kontaktlos ein- bzw. ausgekoppelt werden, wobei die Übertragung von Test- und Antwortsignal zum Ein- und Auskoppeln in den bzw. aus dem Stromkreis der Photovoltaikanlage (2) bidirektional erfolgt.

2. Verfahren nach Anspruch 1,
**dadurch gekennzeichnet, dass**
die charakteristische Kreuzkorrelationsfunktion (KKF) ermittelt wird durch Korrelation und Faltung des Testsignals mit dem Antwortsignal, und Abweichungen von der charakteristischen Kreuzkorrelationsfunktion (KKF) aufgezeichnet werden.

3. Verfahren nach einem der vorhergehenden Ansprüche,
**dadurch gekennzeichnet, dass**
die charakteristische Kreuzkorrelationsfunktion (KKF) den ungestörten Zustand der Photovoltaikanlage (2) repräsentiert, wobei die während eines Detektionszeitraums ermittelte Kreuzkorrelationsfunktion (KKF) mit der charakteristischen Kreuzkorrelationsfunktion (KKF) verglichen und Abweichungen von der charakteristischen Kreuzkorrelationsfunktion (KKF) detektiert werden.

4. Verfahren nach einem der vorhergehenden Ansprüche,
**dadurch gekennzeichnet, dass**
die charakteristische Kreuzkorrelationsfunktion (KKF), kontinuierlich oder in diskreten Zeitabständen, über einen langen Zeitraum ermittelt wird und als Soll- oder Referenzkurve dient, und die im Überwachungsbetrieb ermittelte Kreuzkorrelationsfunktion (KKF), kontinuierlich oder in diskreten Zeitabständen, über einen kürzeren Detektionszeitraum ermittelt wird und die Detektionskurve darstellt.

5. Verfahren nach einem der vorhergehenden Ansprüche,
**dadurch gekennzeichnet, dass**
die Amplituden des Testsignals und der Arbeitspunkt der PN-Dioden der Solarmodule (3) so gewählt werden, dass die Signalspannung nur geringfügig in einem linearen Abschnitt der PN-Diodenkennlinie um den Arbeitspunkt herum variiert.

6. Verfahren nach einem der vorhergehenden Ansprüche,
**dadurch gekennzeichnet, dass**
- die Abhängigkeit des Betriebs oder der elektrischen Eigenschaften der Photovoltaikanlage (2) von der Helligkeit und der Temperatur ermittelt wird,
- Temperatur und Helligkeit in der Umgebung der Photovoltaikanlage (2) gemessen werden, und
- der Einfluss von Temperatur und Helligkeit bei der Ermittlung der Kreuzkorrelationsfunktion (KKF) berücksichtigt wird.

7. Gerät (1) zur Funktions- und Demontagedetektion für aktive oder inaktive Photovoltaikanlagen (2) mit mehreren Solarmodulen (3), die ein Solar-Array (4) bilden, das wenigstens einen parallel geschalteten Solarmodul-String (4a-4d) von in Reihe geschalteten Solarmodulen (3) aufweist, mit
- einer Koppeleinrichtung (6) zur Einkopplung eines sich zeitlich zufällig ändernden Testsignals in den Stromkreis der Photovoltaikanlage (2) sowie zur Auskopplung eines Antwortsignals aus dem Stromkreis der Photovoltaikanlage (2) in Reaktion auf das Testsignal,
- einer Korrelationseinrichtung (20) zur Ermittlung einer charakteristischen Kreuzkorrelationsfunktion (KKF) des Antwortsignals mit dem Testsignal,
- einer Auswerte- und Alarmmeldeeinrichtung (30) zur Aufzeichnung von Abweichungen von der charakteristischen Kreuzkorrelationsfunktion (KKF) und Abgabe eines Alarmsignals als Indikation für einen Demontageversuch, wenn die Abweichungen einen vorbestimmten Schwellenwert überschreiten, wobei das Gerät (1) einen Anschluss zum Zuführen des Testsignals oder einen integrierten Signalgenerator (21) zur Erzeugung des Testsignals aufweist und das Testsignal ein Pseudozufallssignal mit Split-Phase- oder Manchester-Codierung ist.

8. Detektionsgerät (1) nach einem der Ansprüche 7,
**dadurch gekennzeichnet, dass**
die Koppeleinrichtung (6) ein Koppelelement (6a) mit induktiven Mitteln zur kontaktfreien, galvanisch getrennten Einkopplung des Testsignals und Auskopplung des Antwortsignals umfasst.

9. Detektionsgerät (1) nach einem der Ansprüche 7 oder 8,
**dadurch gekennzeichnet, dass**
eine Messwandlerschaltung (7) vorgesehen ist, um das Testsignal und das Antwortsignal anzupassen und zum Aus- bzw. Einkoppeln auf die Koppeleinrichtung (6) zu schalten, wobei die Messwandlerschaltung (7) ein Filter (15) zur Unterdrückung von Störfrequenzen eines Wechselrichters (5) umfasst.

10. Detektionsgerät (1) nach einem der Ansprüche 7 bis9,
**dadurch gekennzeichnet, dass**
das Gerät (1) eine Koaxialleitung (8) zur bidirektionalen Übertragung von Test- und Antwortsignal aufweist, und zwar zur Übertragung des Testsignals zur Koppeleinrichtung (6) und zur Übertragung des Antwortsignals zur Korrelationseinrichtung (20), wobei eine Richtkopplerschaltung (9) zur richtungsabhängigen Abzweigung der über die Koaxialleitung (8) bidirektional übertragenen Test- und Antwortsignale vorgesehen ist.

11. Wechselrichter (5) für die Verwendung in einer Photovoltaikanlage (2), in welchem ein Gerät (1) zur Demontagedetektion für aktive oder inaktive Photovoltaikanlagen (2) mit mehreren Solarmodulen (3), die ein Solar-Array (4) bilden, das wenigstens einen parallel geschalteten Solarmodul-String (4a-4d) von in Reihe geschalteten Solarmodulen (3) aufweist, nach einem der vorhergehenden Ansprüche 7 bis 10 integriert ist.

## Claims

1. Method for functional and disassembly detection for active or inactive photovoltaic systems (2) comprising a plurality of solar modules (3) forming a solar module array (4), wherein the solar module array (4) comprises at least one parallel-connected solar module string (4a-4d) of series-connected solar modules (3), comprising the following steps:
- providing a temporally randomly changing test signal,
- feeding the test signal into the circuit of the photovoltaic system (2),
- receiving a response signal from the circuit of the photovoltaic system (2) in response to the test signal,
- determining a characteristic cross-correlation function (KKF) of the response signal with the test signal,
- recording deviations from the characteristic cross-correlation function (KKF), and
- generating an alarm signal indicative of a disassembly attempt when the deviations exceed a predetermined threshold value, wherein the test signal is a pseudorandom signal having split-phase or Manchester coding, and the test signal as well as the response signal are inserted or extracted in a contactless manner, wherein the transmission of test and response signal for the insertion into and extraction from the circuit of the photovoltaic system (2) is bidirectional.

2. Method according to claim 1, **characterized in that** the characteristic cross-correlation function (KKF) is determined by correlation and convolution of the test signal with the response signal, and deviations from the characteristic cross-correlation function (KKF) are recorded.

3. Method according to one of the preceding claims, **characterized in that** the characteristic cross-correlation function (KKF) represents the undisturbed state of the photovoltaic system (2), wherein the cross-correlation function (KKF) determined during a detection period is compared with the characteristic cross-correlation function (KKF) and deviations from the characteristic cross-correlation function (KKF) are detected.

4. Method according to one of the preceding claims, **characterized in that** the characteristic cross-correlation function (KKF) is determined, continuously or at discrete time intervals, over a long period of time and serves as a set or reference curve, and the cross-correlation function (KKF) determined in monitoring operations is determined, continuous or at discrete time intervals, over a shorter detection period, and represents the detection curve.

5. Method according to one of the preceding claims, **characterized in that** the amplitudes of the test signal and the operating point of the PN diodes of the solar modules (3) are selected so that the signal voltage varies only slightly in a linear portion of the PN diode characteristic around the operating point.

6. Method according to one of the preceding claims, **characterized in that**
- the dependence of the operation or the electrical properties of the photovoltaic system (2) on the brightness and the temperature is determined,
- temperature and brightness in the vicinity of the photovoltaic system (2) are measured, and
- the influence of temperature and brightness is taken into account in the determination of the cross-correlation function (KKF).

7. Apparatus (1) for functional and disassembly detection for active or inactive photovoltaic systems (2) comprising a plurality of solar modules (3) forming a solar module array (4), which comprises at least one parallel-connected solar module string (4a-4d) of series-connected solar modules (3), having
- a coupling device (6) for inserting a temporally randomly changing test signal into the circuit of the photovoltaic system (2) and for extracting a response signal from the circuit of the photovoltaic system (2) in response to the test signal,
- a correlation device (20) for determining a characteristic cross-correlation function (KKF) of the response signal with the test signal,
- an evaluation and alarm device (30) for recording deviations from the characteristic cross-correlation function (KKF) and outputting an alarm signal as an indication for a disassembly attempt when the deviations exceed a predetermined threshold, wherein the device (1) has a connection for supplying the test signal or an integrated signal generator (21) for generating the test signal and the test signal is a pseudo-random signal with split-phase or Manchester coding.

8. Detection apparatus (1) according to one of the claims 7, **characterized in that** the coupling device (6) comprises a coupling element (6a) with inductive means for non-contact, galvanically isolated insertion of the test signal and extraction of the response signal.

9. Detection apparatus (1) according to one of the claims 7 or 8, **characterized in that** a measuring transformer circuit (7) is provided to adapt the test signal and the response signal and to switch to the coupling device (6) for insertion or extraction, wherein the measuring transformer circuit (7) comprises a filter (15) for suppressing interference frequencies of an inverter (5).

10. Detection apparatus (1) according to one of the claims 7 to 9, **characterized in that** the apparatus (1) comprises a coaxial line (8) for bidirectional transmission of test and response signal, namely for transmission of the test signal to the coupling device (6) and for transmission of the response signal to the correlation device (20), wherein a directional coupler circuit (9) is provided for direction-dependent branching of the test and response signals transmitted bidirectionally over the coaxial line (8).

11. Inverter (5) for use in a photovoltaic system (1), in which an apparatus (1) for disassembly detection for active or inactive photovoltaic systems (2) comprising a plurality of solar modules (3) forming a solar module array (4) having at least one parallel-connected solar module string (4a-4d) of series-connected solar modules (3) is integrated according to one of the preceding claims 7 to 10.

## Revendications

1. Procédé de détection de fonctionnement et de démontage pour des installations photovoltaïques actives ou inactives (2) comprenant plusieurs modules solaires (3) qui constituent un réseau de modules solaires (4), le réseau de modules solaires (4) comprenant au moins une chaîne de modules solaires (4a - 4d) branchés en parallèle de modules solaires (3) branchés en série, comprenant les étapes suivantes :
- fournir un signal de test qui se modifie aléatoirement dans le temps,
- injecter le signal de test dans le circuit électrique de l'installation photovoltaïque (2),
- recevoir un signal de réponse du circuit électrique de l'installation photovoltaïque (2) en réaction au signal de test,
- déterminer une fonction de corrélation croisée (FCC) caractéristique du signal de réponse avec le signal de test,
- enregistrer des écarts par rapport à la fonction de corrélation croisée (FCC) caractéristique, et
- générer un signal d'alarme en tant qu'indication pour une tentative de démontage lorsque les écarts dépassent une valeur seuil prédéterminée, le signal de test étant un signal pseudo-aléatoire avec codage en phase divisée ou avec codage Manchester, et le signal de test ainsi que le signal de réponse étant couplés ou découplés sans contact, la transmission du signal de test et du signal de réponse pour le couplage et le découplage dans ou hors du circuit électrique de l'installation photovoltaïque (2) s'effectue de manière bidirectionnelle.

2. Procédé selon la revendication 1,
**caractérisé en ce que**
la fonction de corrélation croisée (FCC) caractéristique est déterminée par corrélation et pliage du signal de test avec le signal de réponse, et des écarts par rapport à la fonction de corrélation croisée (FCC) caractéristique sont enregistrés.

3. Procédé selon l'une des revendications précédentes,
**caractérisé en ce que**
la fonction de corrélation croisée (FCC) caractéristique représente l'état non perturbé de l'installation photovoltaïque (2), et la fonction de corrélation croisée (FCC) déterminée pendant une période de détection est comparée à la fonction de corrélation croisée (FCC) caractéristique et des écarts par rapport à la fonction de corrélation croisée (FCC) caractéristique sont détectés.

4. Procédé selon l'une des revendications précédentes,
**caractérisé en ce que**
la fonction de corrélation croisée (FCC) caractéristique est déterminée en continu ou en intervalles temporels discrets pendant une période prolongée et elle sert de courbe de consigne ou de référence, et la fonction de corrélation croisée (FCC) déterminée en fonctionnement de surveillance est déterminée en continu ou en intervalles temporels discrets pendant une période de détection plus courte et représente la courbe de détection.

5. Procédé selon l'une des revendications précédentes,
**caractérisé en ce que**
les amplitudes du signal de test et le point de travail des diodes PN des modules solaires (3) sont choisis de telle sorte que la tension du signal ne varie que légèrement autour du point de travail dans une portion linéaire de la courbe caractéristique de diode PN.

6. Procédé selon l'une des revendications précédentes,
**caractérisé en ce que**
- on détermine la dépendance du fonctionnement ou des propriétés électriques de l'installation photovoltaïque (2) par rapport à la luminosité et à la température,
- on mesure la température et la luminosité dans l'environnement de l'installation photovoltaïque (2), et
- on prend en compte l'influence de la température et de la luminosité lors de la détermination de la fonction de corrélation croisée (FCC).

7. Appareil (1) de détection de fonctionnement et de démontage pour des installations photovoltaïques actives ou inactives (2) comprenant plusieurs modules solaires (3) qui constituent un réseau solaire (4) qui comprend au moins une chaîne de modules solaires (4a - 4d) branchés en parallèle de modules solaires (3) branchés en série, comprenant :
- un moyen de couplage (6) pour coupler dans le circuit électrique de l'installation photovoltaïque (2) un signal de test qui se modifie aléatoirement dans le temps ainsi que pour découpler hors du circuit électrique de l'installation photovoltaïque (2) un signal de réponse en réaction au signal de test,
- un moyen de corrélation (20) pour déterminer une fonction de corrélation croisée (FCC) caractéristique du signal de réponse avec le signal de test,
- un moyen d'évaluation et d'alarme (30) pour enregistrer des écarts par rapport à la fonction de corrélation croisée (FCC) caractéristique et pour émettre un signal d'alarme en tant qu'indication pour une tentative de démontage lorsque les écarts dépassent une valeur seuil prédéterminée, l'appareil (1) présentant un raccord pour amener le signal de test ou un générateur de signaux intégré (21) pour générer le signal de test, et le signal de test étant un signal pseudo-aléatoire avec codage en phase divisée ou avec codage Manchester.

8. Appareil de détection (1) selon la revendication 7,
**caractérisé en ce que**
le moyen de couplage (6) comprend un élément de couplage (6a) avec des moyens inductifs pour le couplage à isolation galvanique et sans contact du signal de test et pour le découplage du signal de réponse.

9. Appareil de détection (1) selon l'une des revendications 7 ou 8,
**caractérisé en ce que**
il est prévu un circuit convertisseur de mesure (7) pour adapter le signal de test et le signal de réponse et pour l'injecter sur le moyen de couplage (6) afin de le découpler ou de le coupler, le circuit convertisseur (7) comprenant un filtre (15) pour supprimer des fréquences parasites d'un onduleur (5).

10. Appareil de détection (1) selon l'une des revendications 7 à 9,
**caractérisé en ce que**
l'appareil (1) présente une ligne coaxiale (8) pour la transmission bidirectionnelle du signal de test et du signal de réponse, à savoir pour la transmission du signal de test vers le moyen de couplage (6) et pour la transmission du signal de réponse vers le moyen de corrélation (20), et il est prévu un circuit coupleur directionnel (9) pour la dérivation dépendante de la direction du signal de test et du signal de réponse transmis bidirectionnellement via la ligne coaxiale (8).

11. Onduleur (5) pour l'utilisation dans une installation photovoltaïque (2), dans lequel est intégré un appareil (1) pour la détection de démontage pour des installations photovoltaïques actives ou inactives (2) comprenant plusieurs modules solaires (3) qui constituent un réseau solaire (4) qui comprend au moins une chaîne de modules solaires (4a - 4d) branchés en parallèle de modules solaires (3) branchés en série, selon l'une des revendications 7 à 10.
